(19)

Europäisches
Patentamt
European
Patent Office
Office européen
des brevets

(11) **EP 3 503 532 A1**

(12) **EUROPEAN PATENT APPLICATION**

(43) Date of publication:
**26.06.2019 Bulletin 2019/26**

(51) Int Cl.:
**H04N 5/232** (2006.01)     **H04N 5/14** (2006.01)
**H04N 7/18** (2006.01)     **G01S 13/93** (2006.01)

(21) Application number: **18214991.4**

(22) Date of filing: **21.12.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.12.2017   JP 2017246319**

(71) Applicant: **Renesas Electronics Corporation
135-0061 Tokyo (JP)**

(72) Inventors:
• **YASUDA, Koji
  Tokyo, 135-0061 (JP)**
• **KAWAGUCHI, Hirofumi
  Tokyo, 135-0061 (JP)**
• **TSUKAMOTO, Koichi
  Tokyo, 135-0061 (JP)**

(74) Representative: **Betten & Resch
Patent- und Rechtsanwälte PartGmbB
Maximiliansplatz 14
80333 München (DE)**

(54) **ELECTRONIC DEVICE, IMAGEING SYSTEM, AND PROGRAM**

(57)     A semiconductor device includes an imaging time decision circuit that decides an imaging estimated time for a camera, a subject decision circuit that obtains distance data containing information related to a relative position between the camera and an object at every pre-liminarily-set time, and decides a subject on the basis of the distance data in accordance, a moving vector calculation circuit that calculates the moving vector of the subject on the basis of a plurality of pieces of distance data obtained at a plurality of different times, and an imaging condition decision circuit that calculates subject position estimation data that is a relative position between the camera and the subject at the imaging estimated time, decides an imaging conditions at the imaging estimated time, and instructs the camera to image at the imaging estimated time in accordance with the decided imaging conditions.

FIG. 2

**Description**

CROSS-REFERENCE TO RELATED APPLICATIONS

The disclosure of Japanese Patent Application No. 2017-246319 filed on December 22, 2017 including the specification, drawings and abstract is incorporated herein by reference in its entirety.

BACKGROUND

The present invention relates to a semiconductor device, an imaging system, and a program.

In recent years, technology related to an advanced driving support system for an automobile and self-driving has been actively developed. These systems include an imaging apparatus, and obtain images around an automobile through the imaging apparatus. These systems recognize an object around the automobile by using the obtained images. Therefore, in order to improve the recognition accuracy of the object around the automobile, it is desired to obtain a high-definition image. In addition, various proposals have been made for technology to obtain a high-definition image.

An image input/output apparatus described in Japanese Unexamined Patent Application Publication No. Hei 1 (1989) -309478 has means to focus on a plurality of different object surfaces, means to input a plurality of images with the different object surfaces focused on, and means to add the input images together. Further, the image input/output apparatus has means to perform a recovery process for the images added together by the means using spatial frequency filtering.

An image processing apparatus described in Japanese Unexamined Patent Application Publication No. 2006-322796 has an imaging unit that is mounted in a moving object to generate a group of image signals corresponding to a predetermined imaging visual field, a detection unit that obtains moving information of the moving object, and an arrival position prediction unit that predicts the arrival position of an own vehicle after a predetermined period of time. Further, the image processing apparatus includes an arithmetic range setting unit that sets an arithmetic range that is a processing range for the group of image signals on the basis of the prediction result, and an arithmetic unit that calculates a distance to an object located inside the imaging visual field on the basis of the group of image signals corresponding to the set arithmetic range.

SUMMARY

However, the technology of Japanese Unexamined Patent Application Publication No. Hei 1 (1989)-309478 focuses on a depth of focus that is an index to maintain the definition of an image obtained by imaging a subject when the position of an imaging sensor is changed back and forth with respect to the subject at rest. Namely, the technology of Japanese Unexamined Patent Application Publication No. Hei 1 (1989)-309478 does not consider that an image input apparatus or a subject is moved at the time of imaging. Further, the technology of Japanese Unexamined Patent Application Publication No. 2006-322796 does not consider to control a focal distance in accordance with output distance information.

The inventors considered a system obtained by applying the technology described in Japanese Unexamined Patent Application Publication No. Hei 1 (1989) - 309478 to the imaging apparatus mounted in a moving object described in Japanese Unexamined Patent Application Publication No. 2006-322796. As a result, the inventors found that the ranging point of the imaging apparatus and the position of the subject were shifted in a period of time elapsing from the time when the system measured a distance between the imaging apparatus and the subject to the time when the imaging apparatus imaged the subject. As the ranging point and the position of the subject are shifted, the imaged image becomes blurred. Namely, the inventors found a problem that in the case where the surroundings of an automobile are imaged by the related art, the imaged image becomes blurred because the ranging point and the position of the subject are shifted.

The other problems and novel features will become apparent from the description of the specification and the accompanying drawings.

According to an embodiment, a semiconductor device decides, when allowing a camera to image an object whose relative position with the camera changes, an imaging estimated time for the camera in accordance with a trigger signal to start a series of processes for deciding the imaging conditions of the camera. In addition, the semiconductor device obtains distance data containing information related to the relative position at every preliminarily-set time, and decides a subject on the basis of the distance data in accordance with the trigger signal. Further, the semiconductor device calculates the moving vector of the subject on the basis of a plurality of pieces of distance data obtained at a plurality of different times, and estimates a relative position between the camera and the subject at the imaging estimated time on the basis of the calculated moving vector. In addition, the semiconductor device decides the imaging conditions at the imaging estimated time on the basis of the relative position, and instructs the camera to image at the imaging estimated time in accordance with the decided imaging conditions.

According to the embodiment, the semiconductor device can suppress image data to be obtained from being deteriorated under the circumstance where the moving object or the subject is moved.

BRIEF DESCRIPTION OF THE DRAWINGS

Fig. 1 is an outline configuration diagram of an automobile in which an embodiment is mounted;
Fig. 2 is a hardware configuration diagram of a semiconductor device according to a first embodiment;
Fig. 3 is a functional block diagram of the semiconductor device according to the first embodiment;
Fig. 4 is a flowchart for showing a subject information update process in the semiconductor device according to the first embodiment;
Fig. 5 is a flowchart of a process performed by the semiconductor device according to the first embodiment;
Fig. 6 is a flowchart for showing a series of processes to decide imaging conditions in the semiconductor device according to the first embodiment;
Fig. 7 is a functional block diagram of a semiconductor device according to a second embodiment;
Fig. 8 is a flowchart for showing a subject information update process in the semiconductor device according to the second embodiment;
Fig. 9 is a functional block diagram of a semiconductor device according to a third embodiment;
Fig. 10 is a diagram for showing a setting example of a display frame rate in the semiconductor device according to the third embodiment;
Fig. 11 is a functional block diagram of a semiconductor device according to a fourth embodiment;
Fig. 12 is a diagram for showing a setting example of a focus area in the semiconductor device according to the fourth embodiment;
Fig. 13 is a diagram for showing an example of the focus area in the case where a moving object according to the fourth embodiment has stopped at a registered position;
Fig. 14 is a diagram for showing an example of the focus area in the case where the moving object according to the fourth embodiment has stopped at a non-registered position; and
Fig. 15 is a flowchart for showing a subject information update process in the semiconductor device according to the fourth embodiment.

DETAILED DESCRIPTION

In order to clarify the explanation, the following description and drawings are appropriately omitted and simplified. In addition, each element illustrated in the drawings as a functional block for performing various processes can be configured using a CPU (Central Processing Unit), a memory, or other circuits as hardware, and can be realized by a program or the like loaded to a memory as software. Thus, a person skilled in the art can understand that these functional blocks can be realized in various forms such as only hardware, only software, or a combination thereof, and are not limited to any one of these. Thus, in the following description, a configuration exemplified as a circuit can be realized by hardware, software, or both of hardware and software, and a configuration shown as a circuit realizing a function can be shown as a part of software realizing the same function. For example, a configuration described as a control circuit can be described as a control unit. It should be noted that the same elements are followed by the same signs in each drawing, and the duplicated explanation thereof is omitted as needed.

Further, the above-described program can be stored and supplied to a computer using various types of non-transitory computer readable media. The non-transitory computer readable media include various types of tangible recording media. Examples of the non-transitory computer readable media include a magnetic recording medium (for example, a flexible disk, a magnetic tape, or a hard disk drive), a magneto-optical recording medium (for example, a magneto-optical disk), a CD-ROM (Read Only Memory), a CD-R, a CD-R/W, and a semiconductor memory (for example, a mask ROM, a PROM (Programmable ROM), an EPROM (Erasable PROM), a flash ROM, or a RAM (Random Access Memory)). Further, the program may be supplied to a computer by various types of transitory computer readable media. Examples of the transitory computer readable media include an electrical signal, an optical signal, and an electromagnetic wave. The program can be supplied to a computer by the transitory computer readable media via a wired communication path such as a wire or an optical fiber, or a wireless communication path.

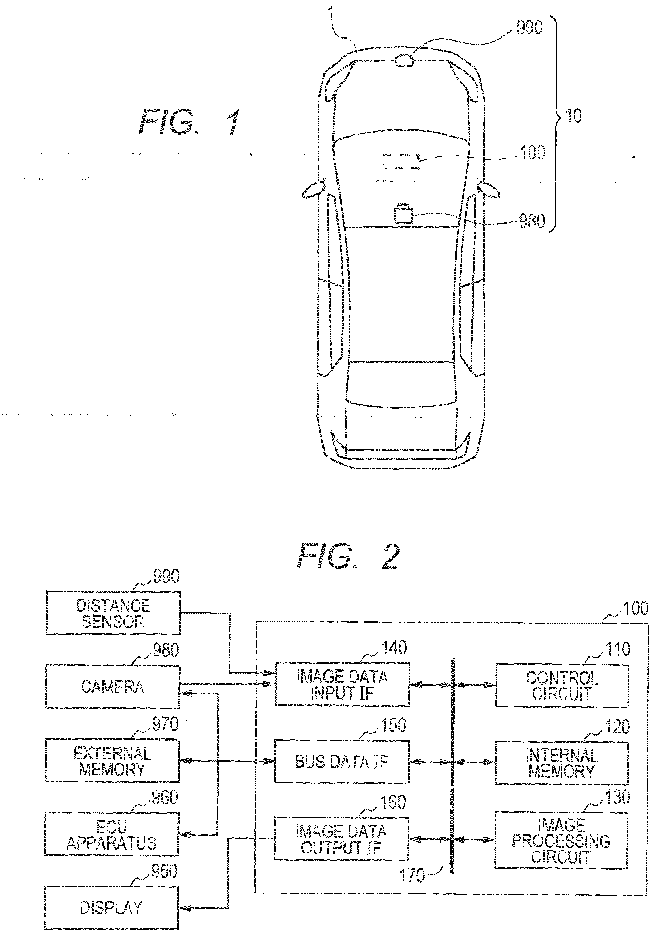

First, an outline of an embodiment will be described with reference to Fig. 1. Fig. 1 is an outline configuration diagram of an automobile in which the embodiment is mounted. Fig. 1 is an upper view of an automobile 1. An imaging system 10 is mounted in the automobile 1. The imaging system 10 is a system to image around the automobile with the camera. The imaging system 10 has a semiconductor device 100, a camera 980, and a distance sensor 990 as main constitutional elements. The imaging system 10 allows the semiconductor device 100 to process distance data of an object produced by the distance sensor 990, and allows the camera 980 to image the object on the basis of the processing result. The image imaged by the imaging system 10 can be used for, for example, a drive recorder, a car navigation system, or the like.

The semiconductor device 100 is installed at an arbitrary position such as a center console of the automobile 1. The camera 980 is an apparatus including an imaging element to image, for example, an image in the travelling direction of the automobile 1. The distance sensor 990 includes, at least, a range where the camera 980 images in the detection range, and detects the position and distance of each obj ect in the detection range. The distance sensor 990 is an apparatus such as an LIDAR (Laser Imaging Detection and Ranging) that detects a distance to a target located at a long distance. The semiconductor device 100, the camera 980, and the distance sensor 990 are coupled so as to be appropriately communicable to each other.

<First Embodiment>

Next, a first embodiment will be described with reference to Fig. 2. Fig. 2 is a hardware configuration diagram of a semiconductor device according to the first embodiment. The semiconductor device 100 decides imaging conditions to allow a camera to image an object whose relative position with the camera changes, and sends an instruction to the camera on the basis of the decided imaging conditions. The semiconductor device 100 is coupled to a distance sensor 990, a camera 980, an external memory 970, an ECU apparatus 960, and a display 950. The semiconductor device 100 has a control circuit 110, an internal memory 120, an image processing circuit 130, an image data input IF 140, a bus IF 150, an image data output IF 160, and a bus 170 as main configurations.

The control circuit 110 is a control circuit including an arithmetic apparatus called as a CPU or an MPU (Micro-processing unit) . The control circuit 110 controls each unit through the bus 170. The control circuit 110 outputs a trigger signal used for starting a series of processes to decide the imaging conditions of the camera 980.

The internal memory 120 is a storage apparatus that stores various data. The internal memory 120 is configured using, for example, a volatile memory such as a DRAM (Dynamic Random Access Memory) or an SDRAM (Synchronous Dynamic Random Access Memory), a non-volatile memory such as an EPROM (Erasable Programmable Read Only Memory) or a flash memory, or a combination thereof. The internal memory 120 stores distance data received from the distance sensor 990.

The image processing circuit 130 is an arithmetic circuit that receives various data through the bus 170, calculates the received various data, and outputs an arithmetic result. The image processing circuit 130 includes, for example, an integrated circuit such as a GPU (Graphics Processing Unit) or an image processing accelerator. The image processing circuit 130 receives a trigger signal from the control circuit 110, and decides an imaging estimated time of the camera in accordance with the received trigger signal. Further, the image processing circuit 130 obtains the distance data stored in the internal memory 120 in accordance with the trigger signal received from the control circuit 110, and decides a subject on the basis of the obtained distance data. The image processing circuit 130 calculates a moving vector of the subject on the basis of a plurality of pieces of distance data obtained at a plurality of different times. Further, the image processing circuit 130 estimates a relative position between the camera 980 and the subject at the imaging estimated time on the basis of the moving vector. Then, the image processing circuit 130 decides the imaging conditions at the imaging estimated time on the basis of the relative position, and instructs the camera 980 to image at the imaging estimated time in accordance with the decided imaging conditions. In addition to the above-described function, the image processing circuit 130 can also receive a plurality of pieces of image data generated by the camera 980 to synthesize the received plural pieces of image data.

The image data input IF 140 is an interface (IF) through which the semiconductor device 100 receives image data from an external apparatus of the semiconductor device 100, and transmits the received image data to the inside of the semiconductor device 100 through the bus 170. More specifically, the image data input IF 140 receives the distance data from the distance sensor 990, and transmits the received distance data to the internal memory 120. In addition, the image data input IF 140 receives the image data from the camera 980, and transmits the received image data to the internal memory 120, the image processing circuit 130, or the like through the bus 170. The image data input IF 140 is, for example, an interface for inputting image data such as a CSI (Camera Serial Interface) . It should be noted that the image data includes the distance data generated by the distance sensor 990 in the description.

The bus IF 150 is an interface through which the semiconductor device 100 transmits or receives various data to/from an external apparatus of the semiconductor device 100. More specifically, the bus IF 150 instructs the imaging conditions for the camera 980. In addition, the bus IF 150 receives program data from the external memory 970, and transmits the received program data to the internal memory 120. In addition, the bus IF 150 receives data related to the automobile 1 from the ECU apparatus, and transmits the received data to the internal memory 120, the image processing circuit 130, or the like through the bus 170.

The image data output IF 160 is an interface through which the image data generated by the semiconductor device 100 is output to the outside of the semiconductor device 100. More specifically, the image data output IF 160 receives the image data generated by, for example, the image processing circuit 130 through the bus 170, and outputs the received image data to the display 950.

The distance sensor 990 is, for example, an apparatus such as an LIDAR that detects a distance to a target located at a long distance. The distance sensor 990 generates the distance data of an object to be detected containing information related to the relative position, and transmits the generated distance data to the image data input IF 140 of the semiconductor device 100. The distance data contains the shape, size, and position of the object to be detected. Namely, the type of an object existing around the automobile 1 and a relative position between the automobile 1 and the object can be calculated by analyzing the distance data.

The camera 980 is, for example, an apparatus including an imaging element that images an image in the travelling direction of the automobile 1. The camera 980 receives the imaging conditions from the bus IF 150 of the semiconductor device 100, and images in accordance with the received imaging conditions. The camera 980 transmits the image data generated by imaging to the image data input IF 140 of the semiconductor device 100.

The external memory 970 is a storage apparatus that transmits or receives data to/from the bus IF 150 of the semiconductor device 100. The external memory 970 is, for example, a non-volatile storage apparatus such as a flash memory, an SSD (Solid State Drive), or an HDD (Hard Disc Drive). The external memory 970 can transmit a preliminarily-stored program file to the bus IF 150 of the semiconductor device 100. In addition, the external memory 970 can receive the image data generated by the semiconductor device 100 from the bus IF 150.

The ECU apparatus 960 exemplifies various ECUs (Electronic Control Units) mounted in the automobile 1. The ECU apparatus 960 is, for example, an apparatus that manages the moving speed of the automobile 1, the steering angle of a steering, and own vehicle position information from a GPS (Global Positioning System). In the automobile 1, the ECU apparatus 960 is coupled so as to be communicable through an in-vehicle communication bus such as onboard Ethernet (registered trademark), a CAN (Controller Area Network), or a LIN (Local Interconnect Network). In the embodiment, the ECU apparatus 960 transmits the moving speed information and the own vehicle position information of the automobile 1 to the bus IF 150 of the semiconductor device 100.

The display 950 is, for example, an apparatus such as a liquid crystal display. The display 950 receives the image data generated by the semiconductor device 100 through the image data output IF 160 of the semiconductor device 100, and displays the received image data.

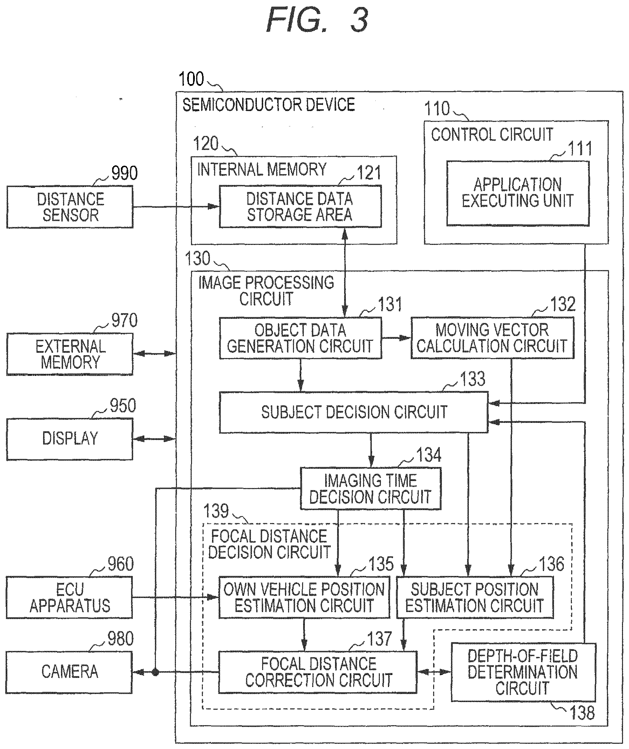

Next, functional blocks of the semiconductor device 100 and a flow of signals will be described with reference to Fig. 3. Fig. 3 is a functional block diagram of the semiconductor device according to the first embodiment.

The internal memory 120 receives the distance data from the distance sensor 990, and stores the received distance data into a distance data storage area 121. The internal memory 120 transmits the stored distance data to the image processing circuit 130 in accordance with a request from the image processing circuit 130. It should be noted that the semiconductor device 100 can be set to receive the distance data from the distance sensor 990 at every preliminarily-set time. In this case, new distance data is written into the distance data storage area 121 at every preliminarily-set time. In addition, the distance data storage area 121 may be configured in such a manner that a plurality of pieces of distance data is stored and the oldest distance data among the pieces of stored distance data is sequentially overwritten by the latest distance data such as a ring buffer.

The control circuit 110 has an application executing unit 111. The control circuit 110 outputs a trigger signal used for starting a series of processes to decide the imaging conditions of the camera 980 to a subject decision circuit 133 of the image processing circuit 130 by executing a predetermined program.

As main configurations according to the disclosure, the image processing circuit 130 has an object data generation circuit 131, a moving vector calculation circuit 132, a subject decision circuit 133, and an imaging time decision circuit 134. In addition, the image processing circuit 130 has an own vehicle position estimation circuit 135, a subject position estimation circuit 136, a focal distance correction circuit 137, and a depth-of-field determination circuit 138. It should be noted that the configuration of the image processing circuit 130 described herein merely shows a part of all the configurations included in the image processing circuit 130 as a matter of course.

The object data generation circuit 131 receives the distance data from the distance data storage area 121 of the internal memory 120, and detects an object contained in the distance data as well as the position of the object. Hereinafter, data generated using the distance data is referred to as object data. The object data contains the distance data of the obj ect detected by the object data generation circuit 131. In order to provide the subject decision circuit 133 with the latest object data, the object data generation circuit 131 obtains the distance data from the distance data storage area 121 at every preliminarily-set time, and updates and holds the latest object data. The object data generation circuit 131 transmits the object data to the moving vector calculation circuit 132 and the subject decision circuit 133.

The moving vector calculation circuit 132 receives a plurality of pieces of object data at a plurality of different times from the object data generation circuit 131, and calculates the moving vector of the detected object on the basis of the pieces of received object data. The moving vector calculation circuit 132 receives the latest object data from the object data generation circuit 131 at every preliminarily-set time, and updates and holds the moving vector of the object on the basis of the received latest object data. Hereinafter, data related to the moving vector of the object will be referred to as moving vector data. The moving vector calculation circuit 132 transmits the moving vector data to the subject position estimation circuit 136.

The subject decision circuit 133 has a function of receiving a trigger signal for allowing the camera 980 to perform an imaging process to decide a subject to be imaged in accordance with the trigger signal. The subject decision circuit 133 receives the trigger signal from a trigger unit 112 of the control circuit 110, and decides a subject on the basis of the object data in accordance with the received trigger signal. Hereinafter, data related to the subject generated by the subject decision circuit 133 will be referred to as subject data. The subject data contains the distance data of the object selected as the subject. The subject decision circuit 133 transmits the decided subject data to each of the imaging time decision circuit 134, the own vehicle position estimation circuit 135, and the subject position estimation circuit 136.

The imaging time decision circuit 134 has a function of deciding an imaging estimated time when receiving the subject data from the subject decision circuit 133 and transmitting the decided imaging estimated time to the own vehicle position estimation circuit 135 and the subject position estimation circuit 136. In addition, the imaging time decision circuit 134 transmits the decided imaging time to the camera 980. The imaging time decision circuit 134 may set the imaging estimated time as a preliminarily-set interval irrespective of the subject data. In addition, the imaging time decision circuit 134 may decide the interval of the imaging estimated time in accordance with the number of subjects contained in the subject data. It should be noted that an interval in which the subject can be continuously imaged is decided on the basis of each constraint condition of the imaging system. Namely, for example, in the case of one subject, one imaging estimated time may be decided. In the case of four or more subjects, four imaging estimated times may be decided.

The focal distance decision circuit 139 decides the imaging conditions, and instructs the camera 980 to image at the imaging estimated time in accordance with the decided imaging conditions. More specifically, the focal distance decision circuit 139 estimates a relative position between the automobile 1 and the subject at the imaging estimated time on the basis of the data related to the movement of the automobile 1, the subject data, the imaging estimated time, and the moving vector data. In addition, the focal distance decision circuit 139 decides a focal distance at the imaging estimated time on the basis of the estimated relative position, and instructs the camera 980 to image at the imaging estimated time in accordance with the decided focal distance. The focal distance decision circuit 139 includes the own vehicle position estimation circuit 135, the subject position estimation circuit 136, and the focal distance correction circuit 137.

The own vehicle position estimation circuit 135 has a function of estimating the moving distance of the automobile 1 at the imaging estimated time on the basis of the data related to the movement of the automobile 1 and the imaging estimated time. The own vehicle position estimation circuit 135 receives data related to the imaging time from the imaging time decision circuit 134. The data related to the imaging time corresponds to the time at which the distance data according to the latest subject data was generated and the imaging estimated time. In addition, the own vehicle position estimation circuit 135 receives own vehicle moving data from the ECU apparatus 960. The own vehicle moving data is, for example, information related to the moving speed of the automobile 1. The own vehicle position estimation circuit 135 accumulates the own vehicle moving data of a preliminarily-set period, and uses data corresponding to the data related to the imaging time received from the imaging time decision circuit 134 among the accumulated data. With such a configuration, the own vehicle moving data corresponding to the time at which the distance data was generated by the distance sensor 990 is used. In the embodiment, a cycle (for example, 60 Hz) in which the ECU apparatus 960 generates data is shorter than that (for example, 20 Hz) in which the distance sensor 990 generates data. In such a case, it is possible to accurately estimate the moving distance of the automobile 1 by using the data of the ECU apparatus 960 generated in a cycle shorter than that in which the distance sensor 990 generates data. The own vehicle position estimation circuit 135 estimates the moving distance of the automobile 1 at the imaging estimated time on the basis of the received data, and transmits the same to the focal distance correction circuit 137. It should be noted that the data generated by the own vehicle position estimation circuit 135 will be hereinafter referred to as own vehicle position estimation data. The own vehicle position estimation data is position estimation data of the automobile 1 that is a moving object, and is data for correcting the subject position estimation data.

The subject position estimation circuit 136 has a function of estimating a relative position with the subject at the imaging estimated time on the basis of the subject data, the moving vector data, and the imaging estimated time. The subject position estimation circuit 136 receives the detected moving vector data from the moving vector calculation circuit 132 and the subject data from the subject decision circuit 133. In addition, the subject position estimation circuit 136 receives data related to the imaging estimated time from the imaging time decision circuit 134. The subject position estimation circuit 136 calculates a relative position with the subject at the imaging estimated time on the basis of these pieces of received data, and transmits the calculated data to the focal distance correction circuit 137. It should be noted that the data obtained by estimating the position of the subject will be hereinafter referred to as subject position estimation data. The subject position estimation data contains the distance data of the subject at the imaging estimated time.

The focal distance correction circuit 137 has a function of deciding a focal distance that is the imaging condition of the camera. The focal distance correction circuit 137 receives the own vehicle position estimation data from the own vehicle position estimation circuit 135, and the subject position estimation data from the subject position estimation circuit 136. The focal distance correction circuit 137 decides the setting of the focal distance that is the imaging condition of the camera at the imaging estimated time on the basis of these pieces of received data. More specifically, the focal distance correction circuit 137 corrects the subject position estimation data using the own vehicle position estimation data. Namely, in the embodiment, a cycle in which the ECU apparatus 960 generates data is shorter than that in which the distance sensor 990 generates data. Therefore, the focal distance correction circuit 137 corrects data related to the moving speed of the automobile 1 contained in the subject position estimation data using the own vehicle position estimation data. Accordingly, it is possible to enhance the accuracy to calculate the focal distance. In addition, the focal distance correction circuit 137 transmits data related to the setting of the decided focal distance to the depth-of-field determination circuit 138. In addition, in the case where the depth-of-field determination circuit 138 does not determine to modify the decision of the subject, the focal distance correction circuit 137 transmits data related to the decided focal distance to the camera 980.

The depth-of-field determination circuit 138 has a function of calculating the depth of field for each imaging estimated time in the case where a plurality of imaging estimated times exists and determining whether or not the setting of the focal distance can be integrated. The depth-of-field determination circuit 138 receives the data related to the setting of the focal distance that is the imaging condition from the focal distance correction circuit 137, and calculates the depth of field for each imaging estimated time on the basis of the received information related to the setting of the focal distance. It should be noted that the depth of field is generally calculated by the following equations.

[Equation 1]

$$fDOF = \frac{c \times F \times d^2}{d^2 + c \times F \times d} \qquad (1)$$

[Equation 2]

$$rDOF = \frac{c \times F \times d^2}{d^2 - c \times F \times d} \qquad (2)$$

[Equation 3]

$$DOF = fDOF + rDOF \qquad (3)$$

In each of the equations (1) to (3), fDOF represents a forward depth of field, c represents the diameter of a permissible circle of confusion, F represents an aperture value, d represents a subject distance, rDOF represents a rearward depth of field, and DOF represents a depth of field. The depth of field means a width in which the camera appears to focus on in the forward and rearward range of the subject when the camera focuses on the subject. For example, in the case where the camera images a subject A and a subject B with different focal distances and the depth of field according to the imaging of the subject A includes the focal distance of the subject B, the subject B is imaged as if being focused on by imaging the subject A. In this case, it is only necessary for the camera to image the subject A in focus once. On the basis of such a principle, the depth-of-field determination circuit 138 calculates the depth of field for each imaging estimated time, and determines whether or not the setting of the focal distance can be integrated. Then, in the case where it is determined that the setting of the focal distance can be integrated, the depth-of-field determination circuit 138 transmits data to decide the subject again. Specifically, for example, in the case where the depth of field when imaging the subject A in focus includes the focal distance of the subject B, the subject B can be omitted from the imaging targets. In this case, the depth-of-field determination circuit 138 transmits data to delete information related to the subject B from the imaging targets to the subject decision circuit 133.

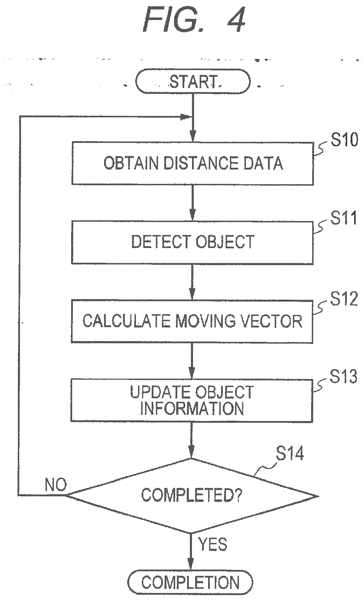

Next, an update process of subject information in the semiconductor device 100 will be described with reference to Fig. 4. Fig. 4 is a flowchart for showing a subject information update process in the semiconductor device according to the first embodiment. Namely, Fig. 4 shows a process in which the object data generation circuit 131 updates the

7

latest distance data and the moving vector calculation circuit 132 updates the latest information related to the moving vector.

First, the object data generation circuit 131 obtains the distance data stored in the internal memory 120 (Step S10). Next, the object data generation circuit 131 detects an object from the obtained distance data (Step S11). The method of detecting an object from the obtained distance data by the object data generation circuit 131 is not limited to one, and various methods have been already disclosed. Thus, the detailed explanation thereof will be omitted in this specification. As a concrete example, the object data generation circuit 131 detects a luminance gradient in each pixel on the basis of the position and the luminance value of each pixel of image data included in the distance data, and can calculate the characteristic amount of each pixel on the basis of the detected luminance gradient. The object data generation circuit 131 can detect that an object exists on the basis of the calculated characteristic amount.

Next, the object data generation circuit 131 transmits the distance data and data related to the detected object to the moving vector calculation circuit 132. When receiving the data, the moving vector calculation circuit 132 calculates the moving vector of each object on the basis of the distance data received in the past and the latest distance data (Step S12). The moving vector can be calculated on the basis of changes in the position of the object in a plurality of pieces of distance data obtained at different times. Since various techniques have been already disclosed, the detailed explanation of a concrete method of calculating the moving vector will be omitted in this specification.

Next, the object data generation circuit 131 updates the subject information with the data related to the detected object (Step S13). When the subject information is updated, the object data generation circuit 131 determines whether or not to complete the process (Step S14). In the case where it is determined not to complete the process (Step S14: No), the distance data is obtained again (Step S10). On the other hand, in the case where it is determined to complete the process (Step S14: Yes), the object data generation circuit 131 completes the process. It should be noted that an interval at which the object data generation circuit 131 updates the subject information may be set to be equal to a frequency at which the distance sensor 990 updates the distance data.

The semiconductor device 100 holds the distance data while always updating the same to the latest state by repeating such a process. Accordingly, the object data generation circuit 131 can provide the latest distance data to the subject decision circuit 133.

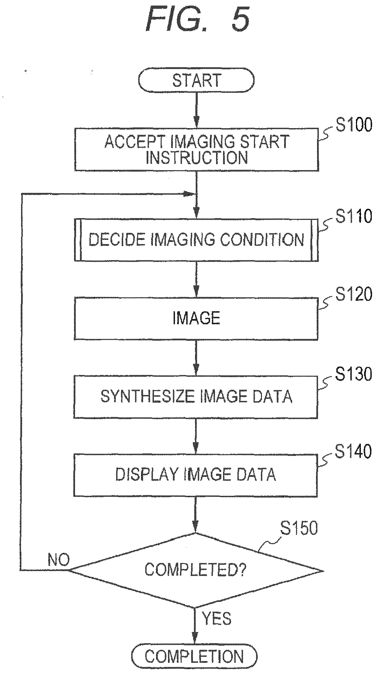

Next, an outline of a process performed by the semiconductor device 100 will be described with reference to Fig. 5. Fig. 5 is a flowchart of a process performed by the semiconductor device according to the first embodiment.

First, the semiconductor device 100 accepts an instruction to start imaging through arbitrary means (Step S100). The arbitrary means may be an operation to instruct to start imaging by a user, or a command to instruct to start imaging from an external device.

Next, the semiconductor device 100 performs an imaging condition decision process (Step S110). Specifically, the control circuit 110 of the semiconductor device 100 outputs a trigger signal. An interval at which the trigger signal is output is decided in accordance with the display frame of the display. Namely, for example, in the case where the display frame rate of the display is 60 Hz, the semiconductor device 100 outputs the trigger signal at a cycle of 60 Hz. In addition, in response to the trigger signal, the semiconductor device 100 performs a series of processes to decide the imaging conditions of the camera 980. It should be noted that the series of processes to decide the imaging conditions will be described later.

Next, the semiconductor device 100 allows the camera 980 to perform an imaging process in accordance with the decided imaging conditions (Step S120). The semiconductor device 100 instructs the imaging conditions on the basis of the imaging frame rate of the camera 980. For example, in the case where the display frame rate of the display is 60 Hz and the imaging frame rate of the camera 980 is 240 Hz, the semiconductor device 100 can instruct the camera 980 to perform the imaging process four times through the series of processes to decide the imaging conditions. In this case, the camera 980 performs the imaging process four times in accordance with the instruction of the semiconductor device 100 to generate four pieces of image data.

Next, the semiconductor device 100 performs a process of synthesizing the pieces of image data generated by the camera 980 (Step S130). For example, in the case where the semiconductor device 100 instructs to set different focal distances at a plurality of imaging estimated times, the camera 980 performs imaging with different focal distances at a plurality of imaging estimated times in accordance with the instruction. At this time, a plurality of images imaged by the camera 980 is set so that the camera focuses on the different subjects. The image processing circuit 130 included in the semiconductor device 100 has a function of synthesizing a plurality of pieces of image data as described with reference to Fig. 2. Namely, when receiving the image data of the image imaged by the camera 980, the image processing circuit 130 extracts each of parts in focus from a plurality of pieces of image data according to a series of processes, and synthesizes one clear image data.

Next, the semiconductor device 100 outputs the synthesized image data to the display 950. The display 950 displays the received image data (Step S140).

Next, the semiconductor device 100 determines whether or not to complete the imaging process (Step S150). For example, the semiconductor device 100 determines whether or not there is an instruction of completing the imaging from a user or an instruction of completing the imaging from an external device. In the case where it is determined not to complete the imaging process (Step S150: No), the semiconductor device 100 performs the series of processes to decide the imaging conditions again by returning to Step S110. On the other hand, in the case where it is determined to complete the imaging process (Step S150: Yes), the semiconductor device 100 completes all the processes.

By performing such a process, the imaging system 10 can synthesize a plurality of pieces of image data imaged by the camera 980 to display the synthesized image data on the display 950.

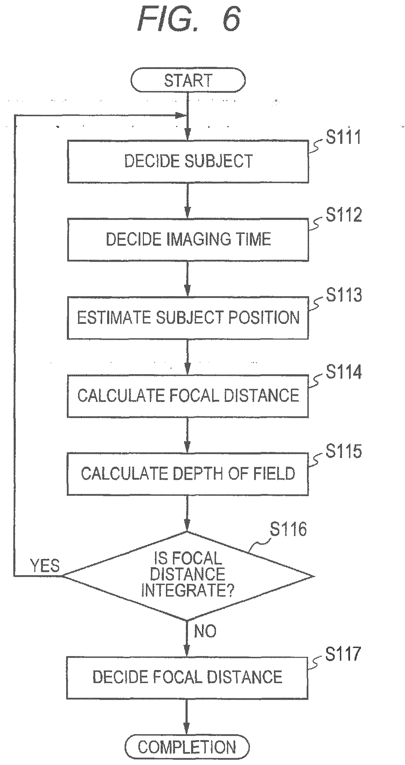

Next, the series of processes to decide the imaging conditions performed by the semiconductor device 100 will be described in detail with reference to Fig. 6. Fig. 6 is a flowchart for showing the series of processes to decide the imaging conditions in the semiconductor device according to the first embodiment. Namely, the flowchart shown in Fig. 6 corresponds to details of Step S110 of the flowchart in Fig. 5. The semiconductor device 100 performs a series of processes every time the trigger unit 112 of the control circuit 110 outputs a trigger signal. The semiconductor device 100 instructs the imaging conditions for the camera 980 in the series of processes.

First, the subject decision circuit 133 of the image processing circuit 130 performs a process to decide a subject in response to a trigger signal output from the trigger unit 112 (Step S111). For example, the subject decision circuit 133 obtains from the object data generation circuit 131 the subject data (p0 to pm) from the latest object data (p0 to pn). It should be noted that "p" represents the distance data of the object, "n" and "m" represent integers equal to or larger than 0, m is equal to or smaller than n. Namely, in the case where the number (for example, n) of objects contained in the distance data is larger than a preliminarily-set number (for example, m), the subject decision circuit 133 can select the objects the number of which is preliminarily set from those contained in the distance data as subjects.

Next, the imaging time decision circuit 134 decides an estimated time at which the subject decided by the subject decision circuit 133 is imaged (Step S112). For example, the imaging time decision circuit 134 decides the imaging estimated time (to to tm) for the subject data (p0 to pm). It should be noted that "t" represents time information.

Next, the subject position estimation circuit 136 estimates the position of the subject on the basis of the imaging estimated time, data related to the subject, and data related to the moving vector of the object (Step S113) . For example, it is assumed that the imaging estimated times are t0 to tm, and the subject data is p0 to pm. Further, it is assumed that the moving vector data is v0 to vn. It should be noted that "v" represents the data related to the moving vector of the object. At this time, the subject position estimation circuit 136 calculates the subject position estimation data {q0 (t0) to qm(tm)} at each imaging estimated time. It should be noted that qm(tm) represents the estimated position of the subject pm at the imaging estimated time tm.

Next, the focal distance correction circuit 137 calculates the focal distance (f0 to fm) for each subject (Step S114) . It should be noted that, as described above, the focal distance correction circuit 137 receives data related to the own vehicle position at the imaging estimated time from the own vehicle position estimation circuit 135, and data related to the position of the subject at the imaging estimated time from the subject position estimation circuit 136.

Next, the depth-of-field determination circuit 138 calculates the depth of field (D0 to Dm) at each focal distance (Step S115).

Next, the depth-of-field determination circuit 138 determines whether or not the setting of the focal distance can be integrated on the basis of the focal distance and the depth of field calculated from the focal distance (Step S116).

In the case where it is determined that the setting of the focal distance can be integrated (Step S116: Yes), the depth-of-field determination circuit 138 transmits data to modify the subject to the subject decision circuit 133. In this case, the image processing circuit 130 returns to Step S111 to perform the process of deciding the subject again. The process will be described according to the above-described example. In the above-described example, it is assumed that the depth of field at the focal distance f0 is D0. At this time, it is assumed that the focal distance f1 is contained in the depth of field D0 of the focal distance f0. In this case, the imaging process at the focal distance f1 can be omitted. Namely, the subject p1 can be omitted. In this case, the depth-of-field determination circuit 138 instructs the subject decision circuit 133 to omit the subject p1.

It should be noted that the depth-of-field determination circuit 138 may repeatedly perform the determination process, or may perform preliminarily-set upper-limit times.

In addition, the subject decision circuit 133 receiving the data to modify the subject from the depth-of-field determination circuit 138 can omit and decide the subject on the basis of the data. In addition, the subject decision circuit 133 can decide to select the subject that was not selected in the previous process to select the subject instead of the omitted subject.

On the other hand, in the case where it is determined that the setting of the focal distance cannot be integrated (Step S116: No), the depth-of-field determination circuit 138 permits the focal distance correction circuit 137 to transmit data related to the setting of the focal distance to the camera 980.

Next, in response to the permission from the depth-of-field determination circuit 138, the focal distance correction circuit 137 decides the focal distance, and transmits an instruction to the camera 980 (Step S117).

With the above-described configuration, the semiconductor device according to the first embodiment can decide the imaging conditions so that the subject is included in the preferred depth-of-field under the circumstance where the moving object or the subject is moved, and can allow the camera to image desired image data on the basis of the decided imaging conditions. Thus, the semiconductor device according to the first embodiment can suppress the image data to be obtained from being deteriorated.

<Second Embodiment>

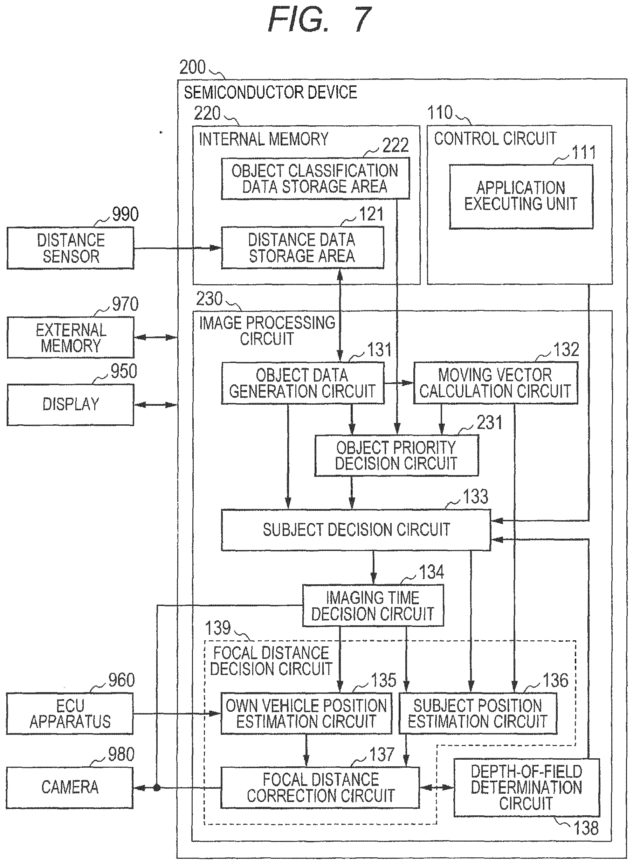

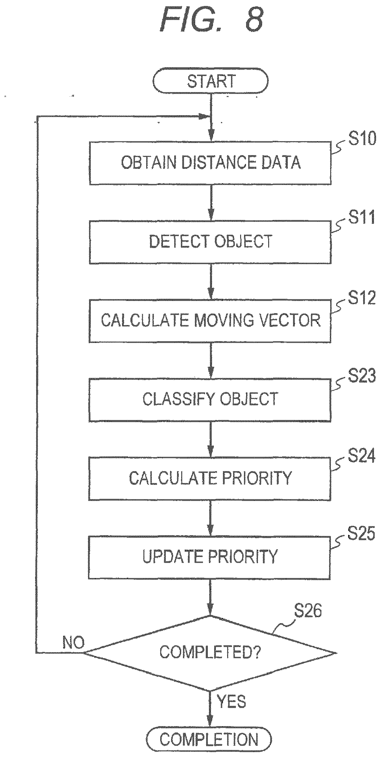

Next, a second embodiment will be described with reference to Fig. 7 and Fig. 8. Fig. 7 is a functional block diagram of a semiconductor device according to the second embodiment. A semiconductor device 200 according to the second embodiment is different from the first embodiment in that an internal memory 220 has an object classification data storage area 222 and an image processing circuit 230 has an object priority decision circuit 231.

The object classification data storage area 222 stores data to classify the object detected by the object data generation circuit 131. For example, the object data generation circuit 131 can detect a pedestrian, a bicycle, a sign, an obstacle, an automobile, or the like as the object. In addition, the object classification data storage area 222 stores data to associate each object with an imaging order.

The object priority decision circuit 231 receives each of object distance data transmitted by the object data generation circuit 131, object classification data transmitted by the object classification data storage area 222, and data related to the moving vector of the object transmitted by the moving vector calculation circuit 132. Then, the object priority decision circuit 231 generates data in which an imaging priority is associated with each detected object on the basis of these pieces of data, and transmits the same to the subject decision circuit 133. For example, in the case where the object data generation circuit 131 detects the object as a pedestrian and the pedestrian is to be moved apart from the automobile 1 as a result of calculating the moving vector, the priority is set to be lower as compared to a case in which the pedestrian is moved in the direction where the pedestrian comes into contact with the automobile 1. On the other hand, in the case where the object data generation circuit 131 detects that the object is a pedestrian and the pedestrian comes close to the automobile 1 as a result of calculating the moving vector, the priority is set to be higher as compared to a case in which the pedestrian is moved in the direction where the pedestrian is moved apart from the automobile 1.

Next, a subject information update process by the semiconductor device 200 according to the second embodiment will be described with reference to Fig. 8. Fig. 8 is a flowchart for showing the subject information update process in the semiconductor device according to the second embodiment. The processes up to Step S12 in the flowchart shown in Fig. 8 are the same as those in the flowchart of the semiconductor device according to the first embodiment described in Fig. 4. Hereinafter, processes different from the first embodiment will be described in detail.

After Step S12, the object priority decision circuit 231 performs a process to classify the object on the basis of the object data transmitted by the object data generation circuit 131 and the object classification data transmitted by the object classification data storage area 222 (Step S23) .

Next, the object priority decision circuit 231 calculates the priority of the object on the basis of data related to the classified object (Step S24). The following is a process as an example of calculating the priority of the object. Namely, the object priority decision circuit 231 calculates a contact time that is a period of time until the object comes into contact with the automobile 1 on the basis of the data related to the classified object and the data related to the moving vector transmitted by the moving vector calculation circuit 132. The object priority decision circuit 231 sets the priority to be high for the objects that possibly come into contact with the automobile 1 as a result of calculating the contact time. In addition, the object priority decision circuit 231 sets the priority to be higher for the object that possibly comes into contact with the automobile 1 sooner among those that possibly come into contact with the automobile 1.

Next, the object priority decision circuit 231 updates the priority of the object on the basis of the calculated priority (Step S25). When the object priority decision circuit 231 updates the object priority, it is determined whether or not to complete the process (Step S26). In the case where the process is not completed (Step S26: No), the distance data is obtained again (Step S10). On the other hand, in the case where the object priority decision circuit 231 determines to complete the process (Step S26: Yes), the process is completed. The object data generation circuit 131 obtains the distance data again (Step S10).

With such a configuration, the semiconductor device 200 according to the second embodiment can perform the imaging process in which the subject on the basis of the preliminarily-set priority is focused on among a plurality of objects.

<Third Embodiment>

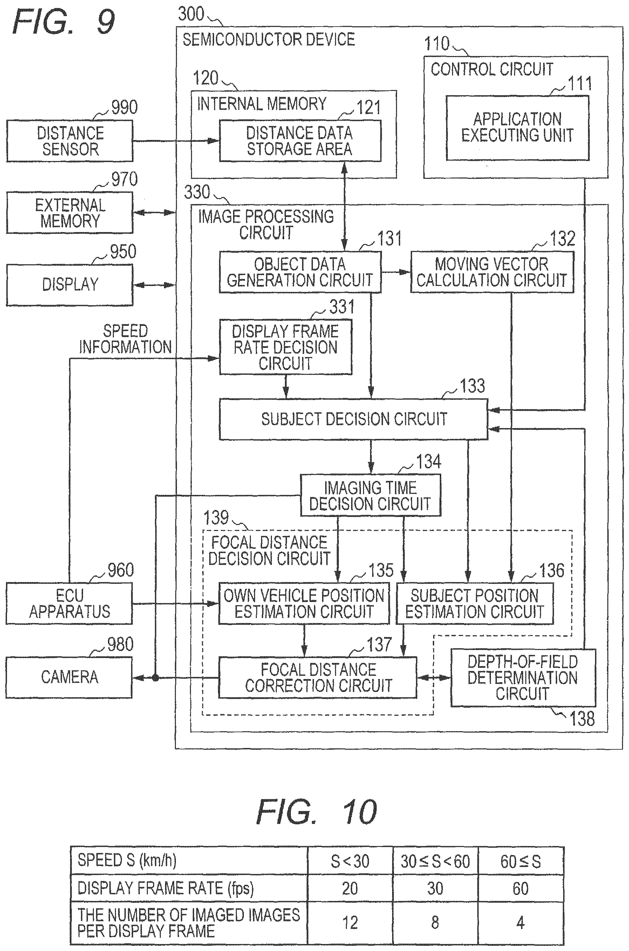

Next, a third embodiment will be described with reference to Fig. 9 and Fig. 10. Fig. 9 is a functional block diagram of a semiconductor device according to the third embodiment. A semiconductor device 300 according to the third embodiment shown in Fig. 9 is different from the semiconductor device according to the first embodiment in that a display frame rate decision circuit 331 is provided.

The display frame rate decision circuit 331 has a function of deciding the display frame rate of the display 950.

The display frame rate decision circuit 331 receives information related to the moving speed of the automobile 1 from the ECU apparatus 960, and decides the display frame rate in accordance with the received moving speed. The display frame rate decision circuit 331 transmits the decided display frame rate to the subject decision circuit 133.

Fig. 10 is a diagram for showing a setting example of the display frame rate in the semiconductor device according to the third embodiment. In the table shown in Fig. 10, the upper row represents the moving speeds of the automobile 1 received from the ECU apparatus 960. In the table, the moving speeds S of the automobile 1 are shown while being separated into three sections such as "slower than 30 km/h", "30 km/h or faster and slower than 60 km/h", and "60 km/h or faster". The middle row represents the display frame rates of the display 950 corresponding to the above-described moving speeds S. The lower row represents the numbers of imaged images per display frame.

On the basis of the table shown in Fig. 10, the display frame rate decision circuit 331 decides the display frame rate as follows. In the case where the moving speed of the automobile 1 is slower than 30 km/h, the display frame rate of the display is 20fps (frames per second) . In the case where the moving speed of the automobile 1 is 30 km/h or faster and slower than 60 km/h, the display frame rate of the display is 30fps. In the case where the moving speed of the automobile 1 is 60 km/h or faster, the display frame rate of the display is 60fps. As described above, in the embodiment, the display frame rate decision circuit 331 processes the display frame rate to be low as the moving speed of the automobile 1 becomes slower.

In the semiconductor device 300, the display frame rate is decided as described above, whereas the imaging frame rate is not changed. Therefore, as the display frame rate is lower, the number of imaged images per display frame is increased. Namely, as shown in Fig. 10, in the case where the display frame rate is 20fps, the number of imaged images is 12. In the case where the display frame rate is 30fps, the number of imaged images is 8. In addition, in the case where the display frame rate is 60fps, the number of imaged images is 4.

The explanation will be continued by returning to Fig. 9. The subject decision circuit 133 receives the display frame rate from the display frame rate decision circuit 331, and the latest object data from the object data generation circuit 131. The subject decision circuit 133 decides the subject in accordance with the display frame rate.

The imaging time decision circuit 134 decides the imaging estimated time in accordance with the display frame rate. In the case of the example shown in Fig. 10, for example, in the case where the moving speed of the automobile 1 is slower than 30 km/h, the imaging time decision circuit 134 decides twelve imaging estimated times. In this case, the semiconductor device 300 synthesizes 12 pieces of image data imaged by the camera 980, and displays the synthesized image data on the display 950.

As described above, in the case where the automobile 1 runs slowly, the semiconductor device 300 according to the third embodiment selects more subjects as compared to a case in which the automobile 1 runs fast, and can image the selected subject in focus. In addition, even in the case where the automobile 1 runs fast, the imaging conditions can be decided so that the subject is included in the preferred depth-of-field, and desired image data can be imaged by the camera on the basis of the decided imaging conditions because the depth-of-field determination circuit 138 is provided. Thus, the semiconductor device according to the third embodiment can suppress the image data to be obtained from being deteriorated.

<Fourth Embodiment>

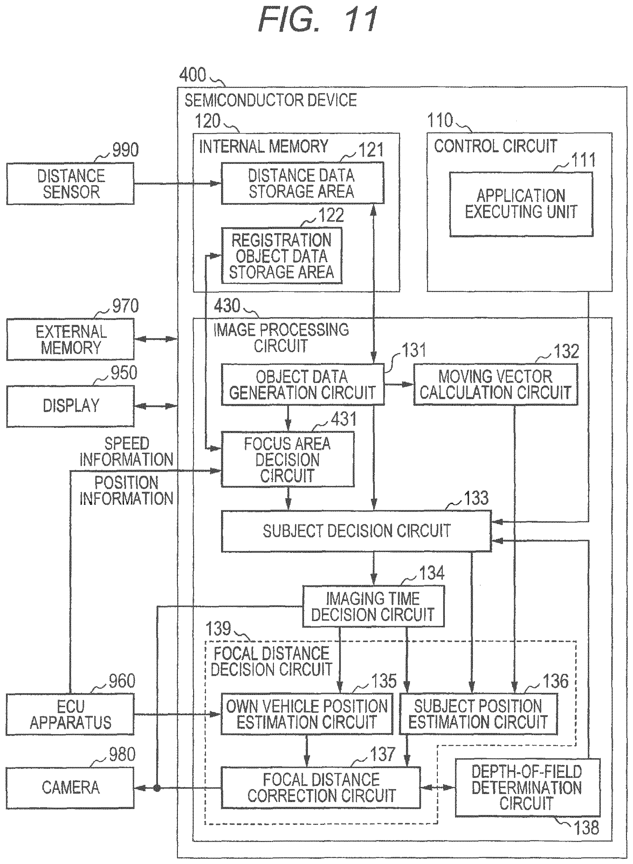

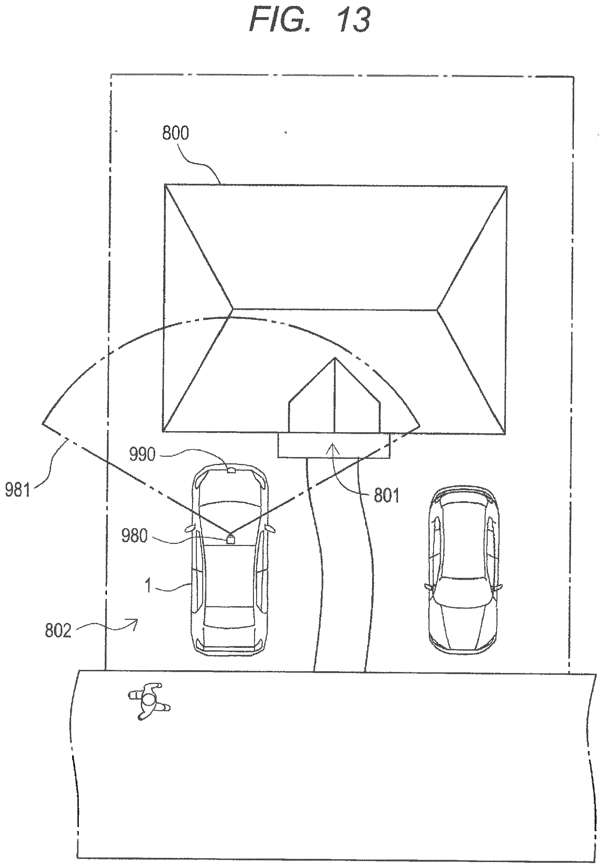

Next, a semiconductor device according to a fourth embodiment will be described with reference to Fig. 11. Fig. 11 is a functional block diagram of the semiconductor device according to the fourth embodiment. A semiconductor device 400 shown in Fig. 11 is different from the semiconductor device according to the first embodiment in that a focus area decision circuit 431 and a registration object data storage area 122 are provided. It should be noted that the registration object data storage area 122 will be described later in detail with reference to the example of Fig. 13.

The focus area decision circuit 431 has a function of deciding a focus area when deciding a subject on the basis of object data. Here, the focus area is a range in which the subject decision circuit 133 selects the subject. The focus area decision circuit 431 receives data related to the moving speed of the automobile 1 from the ECU apparatus 960, and decides the focus area that is a range in which the subject is selected on the basis of the received data. When the focus area is decided, the focus area decision circuit 431 transmits data related to the decided focus area to the subject decision circuit 133. In addition, the focus area decision circuit 431 may have a function of receiving the object data from the object data generation circuit 131 to decide the focus area in accordance with the received object data.

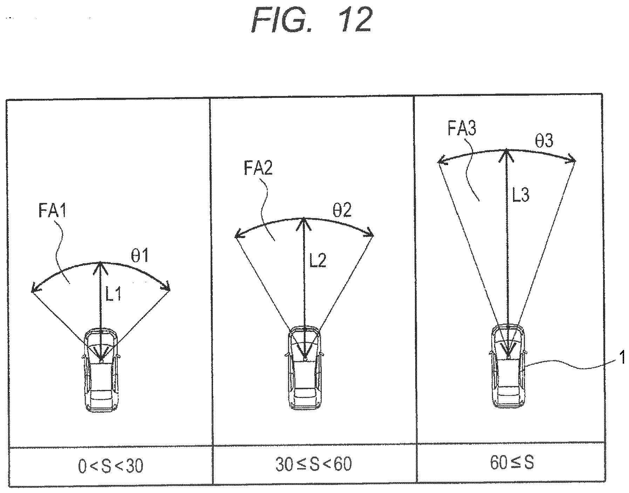

The focus area will be described with reference to the example shown in Fig. 12. Fig. 12 is a diagram for showing a setting example of the focus area in the semiconductor device according to the fourth embodiment. The focus area decision circuit decides the focus area on the basis of, for example, a focus distance and an angle of view. The example shown in Fig. 12 is the same as that shown in Fig. 10 in which the moving speeds of the automobile 1 are shown, and the moving speeds are classified into three stages to set the focus areas in accordance with the classified moving speeds.

In Fig. 12, in the case where the moving speed of the automobile 1 is faster than 0 and slower than 30 km/h, a focus area FA1 is decided on the basis of a focus distance L1 and an angle of view θ1. In addition, in the case where the moving speed of the automobile 1 is 30 km/h or faster and slower than 60 km/h, a focus area FA2 is decided on the basis of L2 longer than the focus distance L1 and θ2 narrower than the angle of view θ1. Further, in the case where the moving speed of the automobile 1 is 60 km/h or faster, a focus area FA3 is decided on the basis of L3 longer than focus distance L2 and θ3 narrower than angle of view θ2. As described above, the semiconductor device 400 according to the fourth embodiment sets the focus distance to be shorter and the angle of view to be wider as the moving speed of the automobile 1 becomes slower. It should be noted that the focus area decision circuit 431 may obtain steering angle information of the automobile 1 in addition to the moving speed to decide the position of the angle of view in accordance with the obtained steering angle information. For example, in the case where the automobile 1 travels in the right direction on the basis of the steering angle information, the angle of view may be shifted to the right side.

The explanation will be continued by returning to Fig. 11. The subject decision circuit 133 receives data related to the focus area from the focus area decision circuit 431, and the latest object data from the object data generation circuit 131. The subject decision circuit 133 selects the subj ect from the objects located in the focus area to generate the subject data.

As described above, the semiconductor device 400 according to the fourth embodiment decides the focus area in accordance with the moving speed of the automobile 1, and decides the subject from the inside of the decided focus area. Accordingly, the semiconductor device 400 can decide the imaging conditions so that the subject is included in the preferred depth-of-field under the circumstance where the automobile 1 is moved, and can allow the camera to image desired image data on the basis of the decided imaging conditions. Thus, the semiconductor device according to the fourth embodiment can suppress the image data to be obtained in accordance with the moving speed of the automobile 1 from being deteriorated.

Next, another example of the semiconductor device 400 according to the fourth embodiment will be described with reference to Fig. 13. Fig. 13 is a diagram for showing an example of the focus area in the case where the moving object according to the fourth embodiment has stopped at a registered position. In the example shown in Fig. 13, the focus area decision circuit 431 has a function of receiving the object data from the object data generation circuit 131 to decide the focus area on the basis of the received object data and registration object data stored in the registration object data storage area 122 of the internal memory 120. Here, the registration object data stored in the internal memory 120 is information obtained by associating specific position information with specific object data. The specific position information is, for example, information of where the automobile 1 is located such as GPS information, and is information corresponding to a preliminarily-registered position. In addition, the specific object data is object data obtained as follows: in the case where the automobile 1 has stopped at a specific position with a preliminarily-set orientation, the object data is obtained from the orientation. In addition, the focus area decision circuit 431 obtains position information of the automobile 1 from the ECU apparatus 960 in addition to information related to the moving speed of the automobile 1. The position information of the automobile 1 is, for example, own vehicle position information detected from a GPS. In the case where the moving speed of the automobile 1 is detected as 0, the focus area decision circuit 431 of the semiconductor device 400 determines that the automobile 1 has stopped. In the case where the automobile 1 has stopped, the focus area decision circuit 431 determines whether or not the automobile 1 has stopped at the preliminarily-registered position on the basis of the obtained position information.

In addition, the focus area decision circuit 431 further receives the object data from the object data generation circuit 131. In addition, the focus area decision circuit 431 has a function of receiving the registration object data from the registration object data storage area 122, verifying the object data with the registration object data, and detecting that the registration object data is contained in the received object data. When detecting the specific object data from the object data, the focus area decision circuit 431 decides the focus area so that the specific object is included.

In the example shown in Fig. 13, the semiconductor device 400 preliminarily registers a parking space 802 of a house 800. In addition, position information of the house 800 and the parking space 802 and object data of an entrance 801 that can be obtained by the automobile 1 having stopped at the parking space 802 towards the house 800 are preliminarily registered in the internal memory of the semiconductor device 400 as the registration object data. In addition, the automobile 1 has stopped at the parking space 802 of the house 800 towards the house 800. In such a circumstance, when detecting that the automobile 1 has stopped at the parking space 802 that is a preliminarily registered specific place, the focus area decision circuit 431 verifies the object data with the registration object data. Then, when detecting the object data of the entrance 801 corresponding to the specific object data from the object data, the focus area decision circuit 431 decides the focus area so that the entrance 801 is included.

As described above, in the case where the automobile 1 has stopped at the preliminarily-registered position, the semiconductor device 400 decides the focus area so that the preliminarily-registered entrance 801 is included, and instructs the imaging conditions in which the entrance 801 is the subject for the camera 980. Accordingly, the semiconductor device 400 can decide the imaging conditions so that the subject is included in the preferred depth-of-field under the circumstance where the automobile 1 has stopped, and can allow the camera to image desired image data on the basis of the decided imaging conditions. Thus, the semiconductor device according to the fourth embodiment can suppress the desired object image data from being deteriorated in accordance with the stop position of the automobile 1.

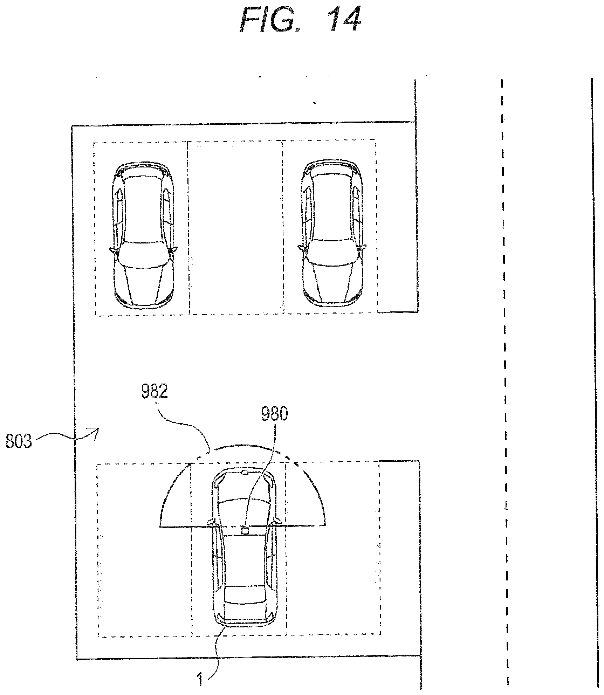

Next, still another example of the semiconductor device 400 according to the fourth embodiment will be described with reference to Fig. 14. Fig. 14 is a diagram for showing an example of the focus area in the case where the moving object according to the fourth embodiment has stopped at a non-registered position.

As similar to the example shown in Fig. 13, the focus area decision circuit 431 of the semiconductor device 400 obtains the position information of the automobile 1 from the ECU apparatus 960. In the case where the automobile 1 has stopped, the focus area decision circuit 431 determines whether or not the automobile 1 has stopped at the preliminarily-registered position on the basis of the obtained position information. In the case where it is determined that the automobile 1 has not stopped at the preliminarily-registered position, the focus area decision circuit 431 decides the focus area in accordance with this.

In the example shown in Fig. 14, the automobile 1 has stopped at a parking space 803. The parking space 803 is not a preliminarily-registered space. When detecting that the automobile 1 has stopped at the parking space 803 that is not a preliminarily-registered space, the focus area decision circuit 431 decides a focus area 982. The focus area 982 is set so that the surroundings of the automobile 1 are imaged with a wide angle of view. The focus area decision circuit 431 transmits data related to the decided focus area 981 to the subject decision circuit 133. It should be noted that in the case where the automobile 1 has a plurality of cameras, the focus area may be decided so that the surroundings of the automobile 1 are imaged by the cameras.

As described above, in the case where the automobile 1 has not stopped at the preliminarily-registered position, the semiconductor device 400 decides to image the surroundings of the automobile 1 using the preliminarily-set focus area. Accordingly, the semiconductor device 400 can decide the imaging conditions so that the subject is included in the preferred depth-of-field using the image data of the surroundings of the automobile 1 as the focus area under the circumstance where the automobile 1 has stopped. Thus, the semiconductor device according to the fourth embodiment can image while suppressing the image data from being deteriorated. This can contribute to, for example, crime prevention for the automobile 1.

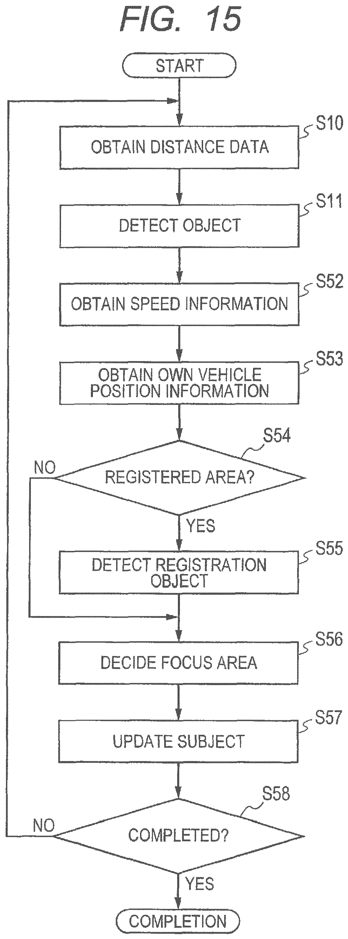

Next, processes of the examples shown in Fig. 13 and Fig. 14 will be described with reference to Fig. 15. Fig. 15 is a flowchart for showing a subject information update process in the semiconductor device according to the fourth embodiment. The flowchart shown in Fig. 15 is different from that of the first embodiment shown in Fig. 4 in the processes after Step S11.

In Step S11, the object data generation unit 131 detects the object from the obtained distance data.

Next, the focus area decision circuit 431 receives information related to the moving speed of the automobile 1 from the ECU apparatus 960 (Step S52). In addition, the focus area decision circuit 431 receives the own vehicle position information of the automobile 1 from the ECU apparatus 960 (Step S53).

Next, the focus area decision circuit 431 determines whether or not the received position information is included in a registered area (Step S54). In the case where the position information is included in the registered area (Step S54: Yes), the focus area decision circuit 431 verifies the object data received from the object data generation unit 131 with the registration object data received from the internal memory 120 to detect that the specific object data is contained in the object data (Step S55).

Next, the focus area decision circuit 431 decides the focus area so that the object corresponding to the specific object data is included (Step S56).

On the other hand, in the case where the position information is not included in the registered area (Step S54: No), the focus area decision circuit 431 does not detect the registration object, and decides the surroundings of the automobile 1 as the focus area (Step S56).

Next, the subject decision circuit 133 decides and updates the subject on the basis of the focus area received from the focus area decision circuit 431 and the object data received from the object data generation unit 131 (Step S57). When the subject decision circuit 133 updates the subject information, it is determined whether or not to complete the process (Step S58). In the case where the process is not completed (Step S58: No), the distance data is obtained again (Step S10). On the other hand, in the case where the subject decision circuit 133 determines to complete the process (Step S58: Yes), the process is completed.

With such a configuration, the semiconductor device 400 according to the fourth embodiment can obtain a desired image in accordance with the moving speed or the stop position of the automobile 1, can decide the imaging conditions so that the subject is included in the preferred depth-of-field, and can allow the camera to image desired image data on the basis of the decided imaging conditions. Thus, the semiconductor device according to the fourth embodiment can suppress the image to be obtained from being deteriorated.

The invention achieved by the inventors has been concretely described above on the basis of the embodiments. However, it is obvious that the present invention is not limited to the above-described embodiments, and can be variously changed without departing from the scope thereof.

Some or all of the above-described embodiments can be described as the following additional statements, but are not limited thereto.

(Additional statement 1)

A semiconductor device comprising:

an imaging time decision unit that decides, when allowing a camera to image an object whose relative position with the camera changes, an imaging estimated time for the camera in accordance with a trigger signal to start a series of processes for deciding the imaging conditions of the camera;
a subject decision unit that obtains distance data containing information related to the relative position at every preliminarily-set time and decides a subject on the basis of the distance data in accordance with the trigger signal;
a moving vector calculation unit that calculates the moving vector of the subject on the basis of a plurality of pieces of distance data obtained at a plurality of different times; and
an imaging condition decision unit that calculates subject position estimation data that is a relative position between the camera and the subject at the imaging estimated time on the basis of the moving vector, decides the imaging conditions at the imaging estimated time on the basis of the subject position estimation data, and instructs the camera to image at the imaging estimated time in accordance with the decided imaging conditions.

(Additional statement 2)

The semiconductor device according to Additional statement 1,
wherein the camera is mounted in a moving object, and
wherein the imaging condition decision unit includes;
a moving object position estimation unit that obtains moving data of the moving object and calculates moving object position estimation data estimated as the position of the moving object at the imaging estimated time on the basis of the obtained moving data and the imaging estimated time obtained from the imaging time decision unit; and
a correction unit that corrects the subject position estimation data on the basis of the moving object position estimation data.

(Additional statement 3)

The semiconductor device according to Additional statement 1, wherein the imaging time decision unit decides a plurality of imaging estimated times in the series of processes.

(Additional statement 4)

The semiconductor device according to Additional statement 1,
wherein the imaging condition is a setting of the focal distance of the camera.

(Additional statement 5)

The semiconductor device according to Additional statement 4,
wherein the imaging time decision unit decides the imaging estimated times in the series of processes, and
wherein the imaging condition decision unit calculates a depth of field for each of the imaging estimated times, determines whether or not the setting of the focal distance can be integrated, and decides to newly add a subject in the case where it is determined that the setting of the focal distance can be integrated.

(Additional statement 6)

The semiconductor device according to Additional statement 1,
wherein subject classification data that is classification data in which it is defined whether or not the object imaged by the camera is preferentially imaged is provided,
wherein a subject priority decision unit that decides a subject priority on the basis of the distance data, the subject classification data, and the moving vector is further provided, and
wherein the subject decision unit decides the subject on the basis of the subject priority.

(Additional statement 7)

The semiconductor device according to Additional statement 2, further comprising:

a display unit that displays the image imaged by the camera; and
a display frame rate decision unit that decides a display frame rate in accordance with the moving speed of the moving object.

(Additional statement 8)

The semiconductor device according to Additional statement 6,
wherein the display frame rate decision unit sets the display frame rate to be lower as the moving speed of the moving object becomes slower.

(Additional statement 9)

The semiconductor device according to Additional statement 6,
wherein the imaging time decision unit decides the imaging estimated time in accordance with the display frame rate.

(Additional statement 10)

The semiconductor device according to Additional statement 9,
wherein the imaging time decision unit increases the number of imaged images per display frame as the display frame rate is lower.

(Additional statement 11)

The semiconductor device according to Additional statement 2, further comprising a focus area decision unit that decides a focus area in accordance with the moving speed of the moving object,
wherein the subject decision unit decides the subject from the inside of the focus area.

(Additional statement 12)

The semiconductor device according to Additional statement 11,
wherein the focus area decision unit sets a focus distance to be shorter and an angle of view to be wider as the moving speed of the moving object becomes slower.

(Additional statement 13)

The semiconductor device according to Additional statement 11,
wherein in the case where the moving speed of the moving object is 0, when the moving object stops at a preliminarily-registered position and object data related to a preliminarily-registered specific object is detected, the focus area decision unit decides the focus area so that the specific object is included.

(Additional statement 14)

An imaging system comprising at least one of a distance sensor that generates the distance data of the object and the camera, and the semiconductor device according to Additional statement 1.

(Additional statement 15)

An imaging method comprising the steps of:

obtaining, when allowing a camera to image an object whose relative position with the camera changes, distance data containing information related to the relative position at every preliminarily-set time;
outputting a trigger signal to start a series of processes for deciding the imaging conditions of the camera;
deciding an imaging estimated time for the camera in accordance with the trigger signal;
obtaining distance data containing information related to the relative position at every preliminarily-set time and deciding a subject on the basis of the distance data in accordance with the trigger signal;
calculating the moving vector of the subject on the basis of a plurality of pieces of distance data obtained at a plurality of different times;
calculating subject position estimation data that is a relative position between the camera and the subject at the imaging estimated time on the basis of the moving vector;
deciding the imaging conditions at the imaging estimated time on the basis of the subject position estimation data; and
instructing the camera to image at the imaging estimated time in accordance with the decided imaging conditions.

(Additional statement 16)

A program allowing a computer to execute the following methods, the methods comprising:

obtaining, when allowing a camera to image an object whose relative position with the camera changes, distance data containing information related to the relative position at every preliminarily-set time;
outputting a trigger signal to start a series of processes for deciding the imaging conditions of the camera;
deciding an imaging estimated time for the camera in accordance with the trigger signal;
obtaining distance data containing information related to the relative position at every preliminarily-set time and deciding a subject on the basis of the distance data in accordance with the trigger signal;
calculating the moving vector of the subject on the basis of a plurality of pieces of distance data obtained at a plurality of different times;
calculating subject position estimation data that is a relative position between the camera and the subject at the imaging estimated time on the basis of the moving vector;
deciding the imaging conditions at the imaging estimated time on the basis of the subject position estimation data; and
instructing the camera to image at the imaging estimated time in accordance with the decided imaging conditions.

(Additional statement 17)

A semiconductor device comprising:

a first interface that obtains, when allowing a camera to image an object whose relative position with the camera changes, distance data containing information related to the relative position at every preliminarily-set time;
a memory that stores the obtained distance data;
a processor that outputs a trigger signal to start a series of processes for deciding the imaging conditions of the camera; and
an image processing circuit that: decides an imaging estimated time for the camera in accordance with the trigger signal; obtains distance data containing information related to the relative position at every preliminarily-set time and decides a subject on the basis of the distance data stored in the memory in accordance with the trigger signal; calculates the moving vector of the subject on the basis of a plurality of pieces of distance data obtained at a plurality of different times; calculates subject position estimation data that is a relative position between the camera and the subject at the imaging estimated time on the basis of the moving vector; decides the imaging conditions at the imaging estimated time on the basis of the subject position estimation data; and instructs the camera to image at the imaging estimated time in accordance with the decided imaging conditions.

(Additional statement 18)

The semiconductor device according to Additional statement 17,
wherein the camera is mounted in a moving object, and
wherein the image processing circuit obtains moving data of the moving object, calculates moving object position estimation data estimated as the position of the moving object at the imaging estimated time on the basis of the obtained moving data and the imaging estimated time, and corrects the subject position estimation data on the basis of the moving object position estimation data.

(Additional statement 19)

The semiconductor device according to Additional statement 17,
wherein the image processing circuit decides a plurality of imaging estimated times in the series of processes.

(Additional statement 20)

The semiconductor device according to Additional statement 17,
wherein the imaging condition is a setting of the focal distance of the camera.

(Additional statement 21)

The semiconductor device according to Additional statement 20,
wherein the image processing circuit decides the imaging estimated times in the series of processes, calculates a depth of field for each of the imaging estimated times, determines whether or not the setting of the focal distance can be integrated, and decides to newly add a subject in the case where it is determined that the setting of the focal distance can be integrated.

(Additional statement 22)

The semiconductor device according to Additional statement 17,
wherein the memory has subject classification data that is classification data in which it is defined whether or not the object imaged by the camera is preferentially imaged, and
wherein the image processing circuit decides a subject priority on the basis of the distance data, the subject classification data, and the moving vector, and decides the subject on the basis of the subject priority.

(Additional statement 23)

The semiconductor device according to Additional statement 18,
wherein the image processing circuit decides a display frame rate in accordance with the moving speed of the moving object.

(Additional statement 24)

The semiconductor device according to Additional statement 22,
wherein the image processing circuit sets the display frame rate to be lower as the moving speed of the moving object becomes slower.

(Additional statement 25)

The semiconductor device according to Additional statement 22,
wherein the image processing circuit decides the imaging estimated time in accordance with the display frame rate.

(Additional statement 26)

The semiconductor device according to Additional statement 25,
wherein the image processing circuit increases the number of imaged images per display frame as the display frame rate is lower.

(Additional statement 27)

The semiconductor device according to Additional statement 18,
wherein the image processing circuit decides a focus area in accordance with the moving speed of the moving object, and decides the subject from the inside of the focus area.

(Additional statement 28)

The semiconductor device according to Additional statement 27,
wherein the image processing circuit sets a focus distance to be shorter and an angle of view to be wider as the moving speed of the moving object becomes slower.

(Additional statement 29)

The semiconductor device according to Additional statement 28,
wherein in the case where the moving speed of the moving object is 0, when the moving object stops at a preliminarily-registered position and object data related to a preliminarily-registered specific object is detected, the image processing circuit decides the focus area so that the specific object is included.

**Claims**

1. A semiconductor device comprising:

   a subject decision circuit configured to obtain, when allowing a camera to image an object whose relative position with the camera changes, distance data containing information related to the relative position at every preliminarily-set time and to decide a subject on the basis of the distance data in accordance with a trigger signal to start a series of processes for deciding the imaging conditions of the camera;
   a moving vector calculation circuit configured to calculate the moving vector of the subject on the basis of a plurality of pieces of distance data obtained at a plurality of different times; and
   an imaging condition decision circuit configured to calculate subject position estimation data that is a relative position between the camera and the subject at the imaging estimated time on the basis of the moving vector, to decide the imaging conditions at the imaging estimated time on the basis of the subject position estimation data, and to instruct the camera to image at the imaging estimated time in accordance with the decided imaging conditions.

2. The semiconductor device according to Claim 1,

   wherein an imaging time decision circuit configured to decide the imaging estimated time in accordance with the trigger signal.

3. The semiconductor device according to Claim 1 or 2,

   wherein the camera is mounted in a moving object, and
   wherein the imaging condition decision circuit includes:

   a moving object position estimation circuit configured to obtain moving data of the moving object and to calculate moving object position estimation data estimated as the position of the moving object at the imaging estimated time on the basis of the obtained moving data and the imaging estimated time obtained from the imaging time decision circuit; and
   a correction circuit configured to correct the subject position estimation data on the basis of the moving object position estimation data.

4. The semiconductor device according to one of Claims 1 to 3,

   wherein the imaging time decision circuit decides a plurality of imaging estimated times in the series of processes.

5. The semiconductor device according to one of Claims 1 to 4,

   wherein the imaging condition comprises a setting of the focal distance of the camera.

6. The semiconductor device according to Claim 5,

   wherein the imaging time decision circuit decides the imaging estimated times in the series of processes, and
   wherein the imaging condition decision circuit calculates a depth of field for each of the imaging estimated times, determines whether or not the setting of the focal distance can be integrated, and decides to newly add a subject in the case where it is determined that the setting of the focal distance can be integrated.

7. The semiconductor device according to one of Claims 1 to 6, further comprising:

   a memory configured to store subject classification data that is classification data in which it is defined whether or not the object imaged by the camera is preferentially imaged; and
   a subject priority decision circuit configured to decide a subject priority on the basis of the distance data, the subject classification data, and the moving vector,
   wherein the subject decision circuit decides the subject on the basis of the subject priority.

8. The semiconductor device according to one of Claims 1 to 7, further comprising a display frame rate decision circuit configured to decide a display frame rate in accordance with the moving speed of the moving object.

9. The semiconductor device according to Claim 8,

   wherein the display frame rate decision circuit sets the display frame rate to be lower as the moving speed of the moving object becomes slower.

10. The semiconductor device according to Claim 8 or 9,

    wherein the imaging time decision circuit decides the imaging estimated time in accordance with the display frame rate.

11. The semiconductor device according to one of Claims 8 to 10,

    wherein the imaging time decision circuit increases the number of imaged images per display frame as the display frame rate is lower.

12. The semiconductor device according to one of Claims 1 to 11, further comprising a focus area decision circuit configured to decide a focus area in accordance with the moving speed of the moving object,

    wherein the subject decision circuit decides the subject from the inside of the focus area.

13. The semiconductor device according to Claim 12,

    wherein the focus area decision circuit sets a focus distance to be shorter and an angle of view to be wider as the moving speed of the moving object becomes slower.

14. The semiconductor device according to Claim 11 or 12,

    wherein in the case where the moving speed of the moving object is 0, when the moving object stops at a preliminarily-registered position and object data related to a preliminarily-registered specific object is detected, the focus area decision circuit decides the focus area so that the specific object is included.

15. An imaging system comprising:

    at least one of a distance sensor configured to generate the distance data of the object and the camera; and the semiconductor device according to one of Claims 1 to 14.

16. A program allowing a computer to execute the following methods, the methods comprising:

    obtaining, when allowing a camera to image an object whose relative position with the camera changes, distance data containing information related to the relative position at every preliminarily-set time;
    outputting a trigger signal to start a series of processes for deciding the imaging conditions of the camera;
    deciding an imaging estimated time for the camera in accordance with the trigger signal;
    obtaining distance data containing information related to the relative position at every preliminarily-set time and deciding a subject on the basis of the distance data in accordance with the trigger signal;
    calculating the moving vector of the subject on the basis of a plurality of pieces of distance data obtained at a plurality of different times;
    calculating subject position estimation data that is a relative position between the camera and the subject at the imaging estimated time on the basis of the moving vector;
    deciding the imaging conditions at the imaging estimated time on the basis of the subject position estimation data, and
    instructing the camera to image at the imaging estimated time in accordance with the decided imaging conditions.

17. A semiconductor device comprising:

    a first interface configured to obtain, when allowing a camera to image an object whose relative position with the camera changes, distance data containing information related to the relative position at every preliminarily-set time;
    a memory configured to store the obtained distance data;

a processor configured to output a trigger signal to start a series of processes for deciding the imaging conditions of the camera; and
an image processing circuit configured to:

decide an imaging estimated time for the camera in accordance with the trigger signal;
obtain distance data containing information related to the relative position at every preliminarily-set time;
decide a subject on the basis of the distance data stored in the memory in accordance with the trigger signal;
calculate the moving vector of the subject on the basis of a plurality of pieces of distance data obtained at a plurality of different times;
calculate subject position estimation data that is a relative position between the camera and the subject at the imaging estimated time on the basis of the moving vector;
decide the imaging conditions at the imaging estimated time on the basis of the subject position estimation data; and
instruct the camera to image at the imaging estimated time in accordance with the decided imaging conditions.

18. The semiconductor device according to Claim 17, further comprising the features as further defined in one of claims 3, 5, or 6.

*FIG. 1*

*FIG. 2*

| | |
|---|---|
| DISTANCE SENSOR 990 | |
| CAMERA 980 | IMAGE DATA INPUT IF 140 — CONTROL CIRCUIT 110 |
| EXTERNAL MEMORY 970 | BUS DATA IF 150 — INTERNAL MEMORY 120 |
| ECU APPARATUS 960 | IMAGE DATA OUTPUT IF 160 — IMAGE PROCESSING CIRCUIT 130 |
| DISPLAY 950 | 170  100 |

# FIG. 3

# FIG. 4

```
                    ┌─────────┐
                    │  START  │
                    └────┬────┘
                         │
    ┌────────────────────┤
    │                    ▼
    │         ┌──────────────────────┐  ⌐S10
    │         │ OBTAIN DISTANCE DATA │
    │         └──────────┬───────────┘
    │                    ▼
    │         ┌──────────────────────┐  ⌐S11
    │         │    DETECT OBJECT     │
    │         └──────────┬───────────┘
    │                    ▼
    │         ┌──────────────────────┐  ⌐S12
    │         │ CALCULATE MOVING VECTOR │
    │         └──────────┬───────────┘
    │                    ▼
    │         ┌──────────────────────┐  ⌐S13
    │         │   UPDATE OBJECT      │
    │         │   INFORMATION        │
    │         └──────────┬───────────┘
    │                    ▼                S14
    │  NO        ◇─────────────────◇
    └──────────◇    COMPLETED?      ◇
                ◇─────────────────◇
                         │ YES
                         ▼
                  ┌─────────────┐
                  │ COMPLETION  │
                  └─────────────┘
```

EP 3 503 532 A1

# FIG. 5

START

ACCEPT IMAGING START INSTRUCTION — S100

DECIDE IMAGING CONDITION — S110

IMAGE — S120

SYNTHESIZE IMAGE DATA — S130

DISPLAY IMAGE DATA — S140

COMPLETED? — S150

NO

YES

COMPLETION

24

# FIG. 6

```
                    ┌─────────────┐
                    │    START    │
                    └──────┬──────┘
                           │
   ┌───────────────────────┤
   │         ┌─────────────▼─────────────┐  ┌─ S111
   │         │      DECIDE SUBJECT        │
   │         └─────────────┬─────────────┘
   │                       │
   │         ┌─────────────▼─────────────┐  ┌─ S112
   │         │     DECIDE IMAGING TIME    │
   │         └─────────────┬─────────────┘
   │                       │
   │         ┌─────────────▼─────────────┐  ┌─ S113
   │         │   ESTIMATE SUBJECT POSITION│
   │         └─────────────┬─────────────┘
   │                       │
   │         ┌─────────────▼─────────────┐  ┌─ S114
   │         │   CALCULATE FOCAL DISTANCE │
   │         └─────────────┬─────────────┘
   │                       │
   │         ┌─────────────▼─────────────┐  ┌─ S115
   │         │   CALCULATE DEPTH OF FIELD │
   │         └─────────────┬─────────────┘
   │                       │            S116
   │ YES               ◇─────────◇
   └──────────────────◇ IS FOCAL  ◇
                       ◇ DISTANCE  ◇
                       ◇ INTEGRATE?◇
                        ◇─────────◇
                           │ NO
                           │
             ┌─────────────▼─────────────┐  ┌─ S117
             │   DECIDE FOCAL DISTANCE    │
             └─────────────┬─────────────┘
                           │
                    ┌──────▼──────┐
                    │ COMPLETION  │
                    └─────────────┘
```

# FIG. 7

200
SEMICONDUCTOR DEVICE

220
INTERNAL MEMORY

222
OBJECT CLASSIFICATION
DATA STORAGE AREA

121
DISTANCE DATA
STORAGE AREA

110
CONTROL CIRCUIT

111
APPLICATION
EXECUTING UNIT

990
DISTANCE
SENSOR

970
EXTERNAL
MEMORY

950
DISPLAY

230
IMAGE PROCESSING
CIRCUIT

131
OBJECT DATA
GENERATION CIRCUIT

132
MOVING VECTOR
CALCULATION CIRCUIT

231
OBJECT PRIORITY
DECISION CIRCUIT

133
SUBJECT DECISION CIRCUIT

134
IMAGING TIME
DECISION CIRCUIT

139
FOCAL DISTANCE
DECISION CIRCUIT

960
ECU
APPARATUS

135
OWN VEHICLE POSITION
ESTIMATION CIRCUIT

136
SUBJECT POSITION
ESTIMATION CIRCUIT

980
CAMERA

137
FOCAL DISTANCE
CORRECTION CIRCUIT

138
DEPTH-OF-FIELD
DETERMINATION
CIRCUIT

# FIG. 8

```
        ( START )
            │
            ▼
┌───────────────────────────┐  S10
│   OBTAIN DISTANCE DATA     │
└───────────────────────────┘
            │
            ▼
┌───────────────────────────┐  S11
│       DETECT OBJECT        │
└───────────────────────────┘
            │
            ▼
┌───────────────────────────┐  S12
│  CALCULATE MOVING VECTOR   │
└───────────────────────────┘
            │
            ▼
┌───────────────────────────┐  S23
│      CLASSIFY OBJECT       │
└───────────────────────────┘
            │
            ▼
┌───────────────────────────┐  S24
│     CALCULATE PRIORITY     │
└───────────────────────────┘
            │
            ▼
┌───────────────────────────┐  S25
│      UPDATE PRIORITY       │
└───────────────────────────┘
            │
            ▼                    S26
   NO    ╱ COMPLETED? ╲
  ◄──────╲           ╱
            │ YES
            ▼
    ( COMPLETION )
```

## FIG. 9

## FIG. 10

| SPEED S (km/h) | S < 30 | 30 ≤ S < 60 | 60 ≤ S |
|---|---|---|---|
| DISPLAY FRAME RATE (fps) | 20 | 30 | 60 |
| THE NUMBER OF IMAGED IMAGES PER DISPLAY FRAME | 12 | 8 | 4 |

## FIG. 11

400 — SEMICONDUCTOR DEVICE

120 — INTERNAL MEMORY

990 — DISTANCE SENSOR

121 — DISTANCE DATA STORAGE AREA

122 — REGISTRATION OBJECT DATA STORAGE AREA

110 — CONTROL CIRCUIT

111 — APPLICATION EXECUTING UNIT

970 — EXTERNAL MEMORY

950 — DISPLAY

430 — IMAGE PROCESSING CIRCUIT

131 — OBJECT DATA GENERATION CIRCUIT

132 — MOVING VECTOR CALCULATION CIRCUIT

431 — FOCUS AREA DECISION CIRCUIT

SPEED INFORMATION

POSITION INFORMATION

133 — SUBJECT DECISION CIRCUIT

134 — IMAGING TIME DECISION CIRCUIT

139 — FOCAL DISTANCE DECISION CIRCUIT

960 — ECU APPARATUS

135 — OWN VEHICLE POSITION ESTIMATION CIRCUIT

136 — SUBJECT POSITION ESTIMATION CIRCUIT

980 — CAMERA

137 — FOCAL DISTANCE CORRECTION CIRCUIT

138 — DEPTH-OF-FIELD DETERMINATION CIRCUIT

FIG. 12

| $0 < S < 30$ | $30 \leq S < 60$ | $60 \leq S$ |

# FIG. 13

# FIG. 14

# FIG. 15

```
                    ( START )
                       │
    ┌──────────────────┤
    │                  ▼
    │        ┌──────────────────────┐  ⌐S10
    │        │  OBTAIN DISTANCE DATA │
    │        └──────────────────────┘
    │                  │
    │                  ▼
    │        ┌──────────────────────┐  ⌐S11
    │        │     DETECT OBJECT     │
    │        └──────────────────────┘
    │                  │
    │                  ▼
    │        ┌──────────────────────┐  ⌐S52
    │        │ OBTAIN SPEED INFORMATION │
    │        └──────────────────────┘
    │                  │
    │                  ▼
    │        ┌──────────────────────┐  ⌐S53
    │        │   OBTAIN OWN VEHICLE  │
    │        │   POSITION INFORMATION │
    │        └──────────────────────┘
    │                  │
    │                  ▼              S54
    │   NO        ╱─────────────╲
    │  ┌─────────( REGISTERED AREA? )
    │  │          ╲─────────────╱
    │  │                │ YES
    │  │                ▼
    │  │      ┌──────────────────────┐  ⌐S55
    │  │      │  DETECT REGISTRATION  │
    │  │      │        OBJECT         │
    │  │      └──────────────────────┘
    │  │                │
    │  └────────────────┤
    │                   ▼
    │        ┌──────────────────────┐  ⌐S56
    │        │   DECIDE FOCUS AREA   │
    │        └──────────────────────┘
    │                  │
    │                  ▼
    │        ┌──────────────────────┐  ⌐S57
    │        │    UPDATE SUBJECT     │
    │        └──────────────────────┘
    │                  │
    │                  ▼              S58
    │   NO        ╱─────────────╲
    └───────────( COMPLETED? )
                 ╲─────────────╱
                       │ YES
                       ▼
                ( COMPLETION )
```

Europäisches
Patentamt

European
Patent Office

Office européen
des brevets

# EUROPEAN SEARCH REPORT

Application Number

EP 18 21 4991

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 1 881 450 A1 (OLYMPUS CORP [JP]) 23 January 2008 (2008-01-23) * paragraph [0025] - paragraph [0030]; figures 1,10-14,21-28,46 * * paragraph [0040] * * paragraph [0158] * * paragraph [0163] * * paragraph [0070] - paragraph [0071] * * paragraph [0159] - paragraph [0160] * * paragraph [0161] - paragraph [0162] * * paragraph [0201] * | 1-18 | INV. H04N5/232 H04N5/14 H04N7/18 G01S13/93 |
| Y | EP 1 311 123 A1 (SAMSUNG ELECTRONICS CO LTD [KR]) 14 May 2003 (2003-05-14) * paragraph [0004] - paragraph [0005] * * paragraph [0011] - paragraph [0013] * * paragraph [0022] - paragraph [0030] * | 1-18 | |
| A | WO 2010/113240 A1 (KONICA MINOLTA HOLDINGS INC [JP]; SUMITOMO HIRONORI [JP]) 7 October 2010 (2010-10-07) * paragraph [0029] - paragraph [0084]; figures 3,4,6,7 * | 1-18 | |
| A | JP 2015 159447 A (CANON KK) 3 September 2015 (2015-09-03) * abstract; figures 1-4 * * paragraph [0050] * * paragraph [0041] - paragraph [0042] * | 1-18 | TECHNICAL FIELDS SEARCHED (IPC) H04N G01S G06T |
| A | JP 2006 322856 A (OLYMPUS CORP) 30 November 2006 (2006-11-30) * abstract * | 1-18 | |

The present search report has been drawn up for all claims

| Place of search | Date of completion of the search | Examiner |
|---|---|---|
| Munich | 8 April 2019 | Brandenburg, Jörg |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 21 4991

This annex lists the patent family members relating to the patent documents cited in the above-mentioned European search report.
The members are as contained in the European Patent Office EDP file on
The European Patent Office is in no way liable for these particulars which are merely given for the purpose of information.

08-04-2019

| Patent document cited in search report | | Publication date | Patent family member(s) | | Publication date |
|---|---|---|---|---|---|
| EP 1881450 | A1 | 23-01-2008 | EP 1881450 A1 | | 23-01-2008 |
| | | | US 2008088707 A1 | | 17-04-2008 |
| | | | WO 2006121087 A1 | | 16-11-2006 |
| EP 1311123 | A1 | 14-05-2003 | CN 1466373 A | | 07-01-2004 |
| | | | DE 60224866 T2 | | 21-05-2008 |
| | | | EP 1311123 A1 | | 14-05-2003 |
| | | | JP 2003189290 A | | 04-07-2003 |
| | | | KR 20030034995 A | | 09-05-2003 |
| | | | US 2003081130 A1 | | 01-05-2003 |
| WO 2010113240 | A1 | 07-10-2010 | JP 5256508 B2 | | 07-08-2013 |
| | | | JP WO2010113240 A1 | | 04-10-2012 |
| | | | WO 2010113240 A1 | | 07-10-2010 |
| JP 2015159447 | A | 03-09-2015 | JP 6300569 B2 | | 28-03-2018 |
| | | | JP 2015159447 A | | 03-09-2015 |
| JP 2006322856 | A | 30-11-2006 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017246319 A
- JP HEI11989309478 B
- JP 2006322796 A